# EUROPÄISCHE PATENTSCHRIFT

(11) **EP 3 168 387 B1**
(45) Veröffentlichungstag und Bekanntmachung des Hinweises auf die Patenterteilung: **04.11.2020**
(21) Anmeldenummer: 16002416.2
(22) Anmeldetag: 14.11.2016
(51) Int. Cl.: C04B 33/34, E04F 11/17, E04F 11/116, E04F 11/104, B28B 1/26, C04B 33/28

(54) **TREPPENSTUFE UND VERFAHREN ZUR HERSTELLUNG EINER TREPPENSTUFE**
STEP AND METHOD FOR MANUFACTURING SAME
MARCHE D'ESCALIER ET PROCÉDÉ DE FABRICATION D'UNE MARCHE D'ESCALIER

(30) Priorität: 14.11.2015 DE 202015007830 U; 16.11.2015 AT 3382015
(43) Veröffentlichungstag der Anmeldung: 17.05.2017
(73) Patentinhaber: kaminofenkeramik Rene Rasbach e.K., 56249 Herschbach (DE)
(72) Erfinder: Rasbach, René, 56316 Rambach (DE)

(56) Entgegenhaltungen:
- EP-A2- 1 136 635
- EP-A2- 1 403 581
- DE-A1- 4 014 548
- DE-A1-102004 063 616
- DE-U- 1 704 938
- US-A- 1 402 296
- US-A- 4 882 111

## Beschreibung

Treppenstufen sind Teil einer Treppe oder Stiege zur Überwindung von Höhenunterschieden im Bereich von Bauwerken. Die Treppenstufe stellt eine Trittstufe bereit, um jeweils einen ersten, nächsten oder letzten Teil des zu überwindenden Höhenunterschieds durch Betreten zu erreichen.

Solche gattungsgemäßen Treppenstufen sind aus Holz, Beton, Naturstein oder Kunststein bekannt. Eine Holztrittstufe "arbeitet" bei Temperaturänderungen, verändert mit der Zeit durch Lichteinflüsse die Farbe und erzeugt zudem Trittschall. Betonstufen sind zu bewehren, da der Beton nur Druck- jedoch kaum einer Zugbelastung standhält. Bei einer baustatischen Auslegung für einen Flächendruck von möglichen ca. 3kN pro Quadratmeter bis zu etwa 10kN/m2 sind solche Holz-, Beton- und Steintreppenstufen zudem mehrere Zentimeter dick auszuführen. Bei entsprechender materialbedingter Dichte erreichen solche Treppenstufen mit mehr als etwa 5cm Treppenstufenstärke ein erhebliches Eigengewicht.

Dieses Eigengewicht steigt noch, wird die Treppenstufe mit Keramikfliesen belegt. Solche die Treppenstufe weiter "verdickenden" Fliesen können sich zudem mit der Zeit lösen und in sogenannten Fugen zwischen den Fliesen kann sich Schmutz festsetzen oder Fugenmaterial geht beispielsweise durch Klima- oder Alterungsprozesse verloren. An Stellen mit fehlendem oder rissigem Fugenmaterial ist die Treppenstufe nicht mehr wasserdicht.

Durch das erhebliche Eigengewicht solcher Beton-, Kunststeintreppenstufen oder gefliesten Treppenstufen ist insbesondere ein entsprechend ausgebildetes Tragwerk für die Treppenstufe erforderlich. Insbesondere eine Wange oder ein Träger, beispielsweise einer Kragarmtreppe, die die Treppenstufe abstützt beziehungsweise an der die Trittstufe angebracht ist, sind bauoptisch wenig ansprechend und teuer. Naturbaustoffe wie Hölzer und Steinmaterial können durch jahrelangen Gebrauch oder beispielsweise Vandalismus stark im Bereich der Trittstufe beansprucht sein. Wird ein Austausch zum Beispiel baupolizeilich notwendig, ist meist eine "optische" Anpassung an die Farbe, Maserung oder Zeichnung der übrigen Trittstufen gar nicht oder nur mit erheblichem finanziellen Aufwand möglich.

Aus der US 1 402 296 A ist eine Treppenstufe mit einer fugenlosen Keramiktrittstufe bekannt, welche aus einem tonhaltigen Material gebrannt ist.

Die EP 1 136 635 A2 offenbart: eine Treppenstufe mit einer fugenlosen Keramiktrittstufe, und zwei Seitenteilen; wobei die Keramiktrittstufe an einem Träger anbringbar und unbewehrt ist; wobei die Keramiktrittstufe gebranntes, tonhaltiges Material umfasst und aus einem Grünkörper geformt ist; wobei je ein Seitenteil auf der der Keramiktrittstufe abgewandten Seite an jeder Langseite der Keramiktrittstufe einstückig an den Grünkörper angeformt ist, welches fallweise ganz oder teilweise formschlüssig an dem Träger anlegbar ist; wobei die Treppenstufe eine zu einer Seite hin offene Ausnehmung aufweist, die den Träger mindestens teilweise aufnehmen kann und von der Keramiktrittstufe und den Seitenteilen begrenzt ist; und wobei die Seitenteile zusammen mit der Keramiktrittstufe durch Brennen des Grünkörpers die einteilige Treppenstufe ausbilden.

Die Trittstufe dieser Keramiktreppenstufe liegt vollflächig auf dem Träger auf und die Seitenteile sind formschlüssig zur Anlage gebracht. Diese vorbekannte Treppenstufe ist aus einem Grünkörper geformt, der nach einem dem Schlickergussverfahren für Sanitärwaren sehr ähnlichen Verfahren hergestellt ist. In der US 4 882 111 A sind Schlickergussverfahren beschrieben, die einen Schlicker aus Ton, Schamotte und Wasser zum Herstellen eines Keramikartikels verwenden. Das hierbei eingesetzte tonhaltige Material enthält bis zu 76% Ton und bis zu 20% Schamotte zum Herstellen von standardisierten keramischen Sanitärwaren.

Es ist eine Aufgabe der vorliegenden Erfindung, eine Treppenstufe der eingangs genannten Art mit technisch einfachen Mitteln zu verbessern.

Diese Aufgabe wird mit den Merkmalen des Anspruchs 1 gelöst. Die erfindungsgemäße Treppenstufe stellt eine fugenlose Keramiktrittstufe bereit. Die gebranntes, tonhaltiges Material umfassende Keramiktrittstufe ist eben und deckt vollflächig eine zu betretende Trittfläche ab. Die vollständig aus gebranntem, tonhaltigen Material gefertigte Keramiktrittstufe kann beispielsweise - wie Steinzeug - eine geringe Feuchtigkeitsaufnahme von weniger als 3 Gew.-% aufweisen. Eine aufwendige Abdichtung von Fugen mit zusätzlichem Dichtstoff wie Silikon entfällt.

Solche Keramiktrittstufen zeichnen sich durch hohe Flächentragfähigkeitswerte im Bereich von 3kN/m2 bis 10kN/m2 bei einer Stufendicke von etwa 1cm bis etwa 7cm aufs. Diese Tonwaren sind aufgrund der Fertigung als einteilige Stufe leiser in Bezug auf den Trittschall. In Gebrauchsstellung kann die Keramiktrittstufe an einem Träger angebracht - beispielsweise aufgeklebt - werden und somit der Trittschall weiter abgeschwächt werden. Zwischen Träger und Keramiktrittstufe kann eine vibrationsschwächende Schicht angeordnet werden, die beispielsweise auf der Rückseite der Keramiktrittstufe angebracht ist.

Aufgrund geringer Torsion der einstückig hergestellten, irdenen Keramiktrittstufe kann auf eine zusätzliche Armierung verzichtet werden. Dies reduziert sowohl das Eigengewicht wie auch die Material- und Fertigungskosten der massenhaft in Serie produzierbaren Treppenstufen gemäß dieser Erfindung.

Erfindungsgemäß ist die Keramiktrittstufe einstückig mit mindestens einem Seitenteil, welches fallweise ganz oder teilweise formschlüssig an dem Träger anlegbar ist. Einstückig bedeutet in Bezug auf diese Beschreibung, dass die beschriebenen Bestandteile der Treppenstufe aus einer einzigen Scherbe geformt sind. Bei einstückiger Ausführung liegt keine Sollbruchstelle vor. Es tritt insbesondere kein Bruch durch langzeitige Umwelteinflüsse oder im Brandfall ein. Mit dem angeformten Seitenteil kann eine noch höhere Steifigkeit der Keramiktrittstufe erzielt werden. Der Trittschall verlagert sich durch die veränderte Eigenfrequenz der Treppenstufe mit angeformten Seitenteilen weiter.

Solche Seitenteile decken in Gebrauchsstellung der erfindungsgemäßen Treppenstufe den Träger teilweise ab. Der Träger ist somit weniger zu sehen und teils besser vor Umwelteinflüssen geschützt. Solche aus gebrannten tonhaltigen Material fertigten Seitenteile sind mit noch geringerer Wandstärke von etwa 1 cm bis 5cm herstellbar und erhöhen das Gewicht einer rechteckigen oder trapezförmig geformten Keramiktrittstufe kaum.

Liegt das Seitenteil in Gebrauchsstellung teils am Träger an, kann ein Verrutschen der Treppenstufe und Trittschall verhindert werden.

Erfindungsgemäß weist die Treppenstufe eine zu einer Seite hin offene Ausnehmung auf, die den Träger mindestens teilweise aufnimmt und von der Keramiktrittstufe und einer Unterplatte begrenzt ist. Der die Treppenstufe tragende Träger ist in die Stufe einzuführen und beispielsweise als Kragarmträger praktisch unsichtbar. Insbesondere kann bei Versagen der Verklebung mit dem Träger die Treppenstufe sicher auf dem Träger ruhen, der innerhalb der Treppenstufe in der Ausnehmung gehalten wird. Eine Keramikunterplatte bildet mit zwei Keramikseitenteilen und der Keramiktrittstufe ein O-Profil im Querschnitt. Hierbei kann die Trittstufe auch nicht "wegkippen" falls der Kleber versagt.

Eine geschlossene Treppe lässt sich nach einer weiter vorteilhaften Weiterbildung der Treppenstufe gemäß der Erfindung erstellen, wenn ein Antritt einstückig oder fest verbunden ist mit der Keramiktrittstufe. Der Antritt ist hierbei insbesondere unverlierbar an die Treppenstufe angeformt. Ein solcher Keramikantritt ist auch nach jahrelangem Gebrauch an einer vielbenutzten Treppe noch "ansehnlich" und leicht sauber zu halten, da die harte Oberfläche kaum Abnutzungsspuren aufweisen wird.

Nach einer vorteilhaften Weiterbildung der erfindungsgemäßen Treppenstufe ist es vorgesehen, dass die Keramiktrittstufe, das Seitenteil, die Unterplatte und/oder der Antritt mindestens eine Vertiefung, eine Erhebung oder eine Bohrung aufweist. Da ein hart gebrannter Werkstoff eingesetzt wird, können recht feine Strukturen an der Treppenstufe gemäß der vorliegenden Erfindung verwirklicht werden. So sind beispielsweise Vertiefungen in Form von Rillen im Bereich der Keramiktrittstufe einzubringen, die Schmutz und Wasser, insbesondere bei Einsatz im Außenbereich einer Treppe oder im Treppenhaus, aufnehmen können. Die enorme Widerstandsfähigkeit solcher Werkstoffe macht auch Erhöhungen mit scharfen Konturen möglich, die beispielsweise rutschhemmend ausgelegt sein können. Mittels Bohrungen können Teile des Geländers einer Treppe hindurchgreifen, Befestigungsmittel geführt werden, die am Träger abgestützt sind. Diese Bohrungen können auch als Sackloch ausgeführt sein und zudem die Aufgaben einer Wasserableitung von der Trittfläche übernehmen.

Eine weitere vorteilhafte Ausführungsform der erfindungsgemäßen Treppenstufe ist so gestaltet, dass eine Stirnwand an einem Ende der Keramiktrittstufe angeformt ist. Solch eine Keramiktreppenstufe ist an deren freiem Ende oder am Ende der Ausnehmung geschlossen durch eine Keramikstirnwand. Solch eine Stirnwand kann mit einer Wandstärke von etwa 1cm bis etwa 3cm ausgeführt sein. Die Stirnwand dient der Abdeckung des Trägers ebenso wie seinem Schutz. Optisch kann die Treppenstufe an diesem sichtbaren Ende so frei gestaltet werden, wie es der harte Werkstoff zulässt. Insbesondere abgerundete, ovale Stirnwände oder mit angedeuteten Wangen versehene Stirnwände sind möglich.

Besonders individuell geformte, erfindungsgemäße Treppenstufen sind möglich, ist die Keramiktrittstufe mit einer in etwa rechtwinkligen oder abgerundeten Stufenkante versehen und/oder schließt mit einer regelmäßig oder unregelmäßig geformten Motivkante ab. Vor dem abschließenden Brennvorgang kann ein Grünkörper mit verschiedenen Radien an seinen Kanten versehen werden. Der Grünkörper erfährt im Brennprozess eine vorberechenbare Schrumpfung, wobei solche vorbestimmten Radien erhältlich sind. Die erfindungsgemäße Keramiktreppenstufe weist somit auch gewünschte, geschwungene Trittkanten auf. Die Motivkante kann gegenüber der Trittkante angelegt sein und zum Beispiel eine Skyline einer Stadt oder Wellen mit Strand und Sanddekor abbilden.

Nach einer vorteilhaften Ausführungsform der vorliegenden Erfindung ist die Treppenstufe, die Keramiktrittstufe und/oder mindestens eine Wandung teil- oder vollflächig mittels einer Engobe oder einer Glasur wasserdicht versiegelt. Die Wandung bildet eine Außenhülle der Treppenstufe, der Trittstufe, des Seitenteils, der Unterplatte, des Antritts oder der Stirnwand. Die Engobe ist aus Ton hergestellt und ähnlich der Glasur im selben oder einem separaten Brennverfahren herzustellen.

Die Treppenstufe gemäß dieser Erfindung ist vorteilhaft so gestaltet, dass die Keramiktrittstufe, das Seitenteil, die Unterplatte, der Antritt und/oder die Stirnwand mit Farbpigment versehen ist, das witterungs- und lichtbeständig in Form einer sichtbaren Anordnung eingebracht ist, die insbesondere ein Bild, ein Logo, einen Buchstaben, einen Schriftzug oder ein Muster bereitstellt. Die Farbpigmente können den Brennprozess überstehen oder in diesem Prozess erst aus Vorstufen des Farbpigments entstehen. Die Anordnung dieser Pigmentierung bildet beispielsweise eine Nachbildung einer Holzmaserung, einer Betonplatte oder eines Steinmaterials. Das so aufgebrachte Bild kann auch ein Fugenmuster umfassen. Die Pigmentierung kann auch säure- und laugenfest ausgelegt sein, beispielsweise durch Einbringen der Pigmente innerhalb der Engobe oder durch Abdeckung der Pigmente mit der Glasur.

Eine erfindungsgemäße Treppenstufe kann so weitergebildet werden, dass eine Information in Bezug auf chemische Zusammensetzung, zu einem Brennprozess und/oder einer Pigmentierung für einen vorbestimmten Zeitraum gespeichert wird und mittels eines an der Treppenstufe angeordneten Codes die Treppenstufe diesen gespeicherten Daten zuzuordnen ist. Geht solch eine Treppenstufe kaputt, hat einen Materialfehler und/oder es ändert sich ein Maß der Treppenstufe wegen Umbaumaßnahmen, so kann diese Stufe leichter ersetzt werden. Anhand der gespeicherten Daten kann solch eine Treppenstufe später kopiert und erneut produziert werden. Dabei können auch Fortschritte im Fertigungsprozess und/oder der Zusammensetzung einfließen.

Eine vorteilhafte Weiterbildung der Treppenstufe ist so gestaltet, dass die Keramiktrittstufe mindestens teilweise von einem Antirutschbelag abgedeckt ist. Dazu können auf den Grünkörper vor dem Brennprozess Hartstoffe wie zum Beispiel Korund in entsprechend geeigneter Körnung oder in Pulverform aufgebracht werden. Alternativ kann auf die Keramiktrittstufe nach dem Brennvorgang ein Gummi- oder Kunststoffbelag angebracht werden, der bei Abnutzung auch ausgetauscht werden könnte. Der Antirutschbelag schützt insbesondere bei Nässe vor Aus- und Abrutschen von der naturgemäß sehr ebenen Keramiktrittstufe.

Die Treppenstufe nach der vorliegenden Erfindung ist beispielsweise aus einem keramischen Werkstück gefertigt und besonders auch gegen Hitzeeinwirkung resistent. Solche Treppenstufen eignen sich somit auch für den Einsatz in Fluchttreppen und Feuertreppen. Es ist somit erfindungsgemäß vorgesehen, dass ein Notlicht an der Treppenstufe angeordnet ist, dass an der Keramiktrittstufe abgestützt ist. Beispielsweise kann eine Lampenfassung mit samt allen elektrischen Leitungen in die Bohrung oder die Vertiefung der Treppenstufe eingebracht werden. Auch ist es denkbar, dass das Leuchtmittel mittels einer thermoplastischen Klebmasse direkt nach dem Brennprozess an der Keramiktrittstufe angebracht wird. Leuchtmittel gemäß der Erfindung umfassen Lightemissiondiodes - kurz LED - und fluoreszierende sowie phosphoreszierende Streifen und Leuchtmittel in SMD- Bauweise, zum Beispiel als LED-Lichtbänder. Solch ein Notlicht kann selbst bei starker Rauchentwicklung, insbesondere im Brandfall, den Fluchtweg mittels Lichtpunkten auf den Treppenstufen gut erkennbar aufzeigen.

Vorteilhafter Weise ist die erfindungsgemäße Treppenstufe so weitergebildet, dass die Treppenstufe innenliegend mit einem austauschbaren Energiespeicher für elektrische und/oder thermische Energie ausgestattet ist. Der austauschbare elektrische Energiespeicher kann zum Beispiel als Akku ausgelegt sein. Der Energiespeicher liefert beispielsweise die Strommenge die zur Stromversorgung der Notlichter benötigt wird und kann auch zur Zwischenspeicherung von dezentral, insbesondere durch eine gebäudeeigene Solaranlage, erzeugten Strommengen dienen. Der thermische Energiespeicher kann beispielsweise ein Soletank sein, der überschüssige Wärmeenergie aus dem Heizungsnetz oder aus einer Solaranlage zwischenspeichert. Zwischen dem thermischen Energiespeicher und der Treppenstufe sowie zwischen Speicher und Träger wird eine Wärmeisolierung eingesetzt. Der Grünkörper kann vor dem Brennprozess mit geeigneten Aussparungen ausgestattet werden, die später im Inneren der Treppenstufe mindestens einen Energiespeicher aufnehmen können. Die Speicher sind praktisch "unsichtbar" und platzsparend untergebracht und können durch neue und/oder effizientere Speichermodule jederzeit ersetzt werden. Entsprechende Zuleitungen können über den Träger in die Gebäudewand verlegt und an das Gebäudenetz angeschlossen sein.

Die erfindungsgemäße Keramiktreppenstufe ist durch die gewählten Rohstoffe besonders als Wärmespeicher geeignet und könnte als Oberflächenheizung Verwendung finden. Der elektrische Energiespeicher könnte nach einer weiteren Ausführungsform der Erfindung durch eine Widerstandsheizung ersetzt oder mit dem Energiespeicher kombiniert sein.

Es ist eine weitere Aufgabe der vorliegenden Erfindung ein Verfahren zum Herstellen einer Treppenstufe anzugeben, dass eine kostengünstige und effiziente Möglichkeit schafft, die äußere Form - bei extrem langer Haltbarkeit der Treppenstufe - leicht zu bestimmen.

Diese Aufgabe wird erfindungsgemäß mit folgenden Schritten erreicht:
a) Erstellen eines Grünkörpers aus einer Mischung von Ton, Schamotte und Wasser, wobei die Mischung in eine Gießform eingebracht wird und bis zu einem vorbestimmten Wassergehalt entwässert wird,
b) wobei der Grünkörper in Form der Treppenstufe gebracht wird und
c) in einem thermischen Sinterprozess gebrannt wird.

Die Form der Treppenstufe kann aus einem recht einfach zu bearbeitenden Tonmaterial im ungebrannten Zustand des Grünkörpers händisch wie maschinell er-, bearbeitet und umgearbeitet werden. Da erfahrungsgemäß ein Maß für das Schrumpfen des Grünkörpers bei Trocknung und Sinterprozess vorbestimmbar ist, kann der Grünkörper und damit die daraus entstehende Treppenstufe "maßgeschneidert" werden. Neben Größe und Form kann der Grünkörper vor dem Brennvorgang noch mit weiteren vorstehend genannten Bauteilen ergänzt werden. Bei einteiligem Anformen dieser Bauteile der Treppenstufe entfallen insbesondere Fugen und Fügestellen, Bruchstellen usw., wodurch eine besonders haltbare komplex geformte Treppenstufe ermöglicht wird.

Der Grünkörper kann zudem oberflächlich veredelt werden durch Aufbringen einer Engobe oder einer Pigmentierung oder eines Antirutschbelags. Auch nach dem Sinterprozess kann die Treppenstufe noch mit Mustern, Texten und dergleichen belegt werden, die in einem weiteren Thermalverfahren, zum Beispiel mittels Einbrennfarbe, dauerfest angebracht werden.

Nach einer vorteilhaften Weiterbildung des erfindungsgemäßen Herstellungsverfahrens kann es vorgesehen sein, dass der Form des Grünkörpers der Treppenstufe unter Berücksichtigung eines Schrumpfmaßes wahlweise ein Seitenteil, eine Unterplatte, ein Antritt, eine Erhebung, eine Stirnwand und/oder eine Wandung aus der Mischung angeformt wird. Dieses Anformen führt insbesondere zu einer einteiligen Treppenstufe. Das Anformen wird vorteilhaft vor dem Trocknungsschritt und dem Sinterprozess ausgeführt und erzeugt auch komplexeste dreidimensionale, fugenlose und unbewehrte Formen der Keramiktreppenstufe.

Die Treppenstufe kann somit vor dem Sinterprozess optimal an den späteren Einsatzort angepasst werden, den Träger teilweise oder ganz abdecken oder aufnehmen und wahlweise noch mit Aussparungen versehen werden, die innerhalb der Treppenstufe die Aufnahme eines austauschbaren Energiespeichers möglich macht.

Weitere Merkmale und Vorteile der Erfindung ergeben sich aus der folgenden Beschreibung mehrerer Ausführungsbeispiele sowie aus den Zeichnungen, auf die nachfolgend Bezug genommen wird. Es zeigen:
- Figur 1: ein erstes Ausführungsbeispiel einer erfindungsgemäßen Treppenstufe mit Träger;
- Figur 2: eine perspektivische Ansicht eines zweiten Ausführungsbeispiels in Gebrauchsstellung;
- Figur 3: ein drittes Ausführungsbeispiel;
- Figur 3a: eine Querschnittansicht des dritten Ausführungsbeispiels; und
- Figur 4: einen Grünkörper als Vorläufer eines vierten Ausführungsbeispiels der Treppenstufe in Seitenansicht.

Sofern im Folgenden nichts anderes gesagt ist, gilt die folgende Beschreibung stets für alle Figuren und es beziehen sich gleiche Bezugszeichen stets auf dieselben konstruktiven Merkmale.

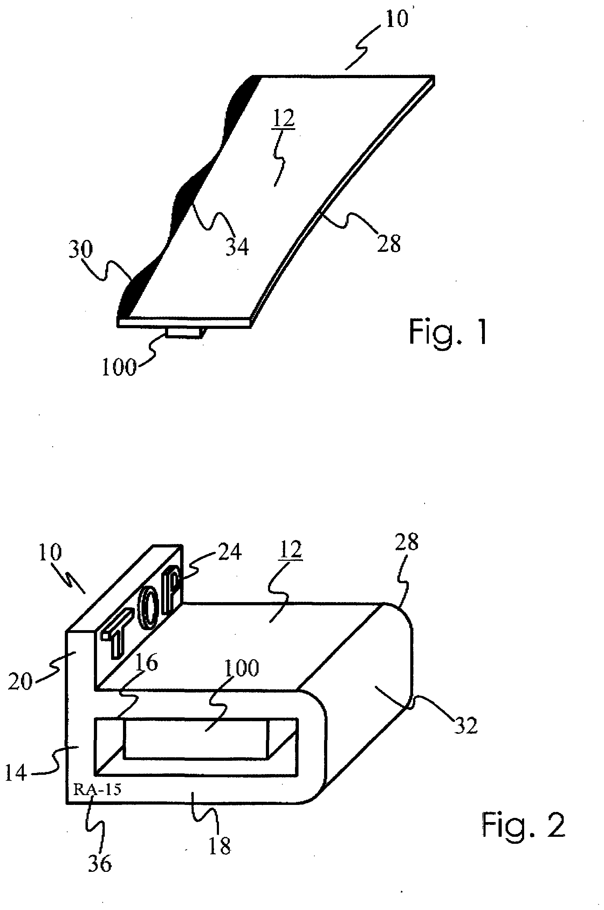

In Figur 1 ist eine Treppenstufe 10 mit einer fugenlosen Keramiktrittstufe 12 gezeigt, die unbewehrt ist, welche gebranntes, tonhaltiges Material umfasst.

Das Material umfasst etwa 60% Ton mit ca. 70% Siliciumdioxid SiO2, ca. 16,9% Aluminiumoxid Al2O3, ca. 7,33% Calziumoxid CaO, ca. 2,0% Kaliumoxid K2O, ca.1,45% Titanoxid TiO2, ca. 0,9% Eisenoxidgemisch FeO/Fe2O3, ca. 0,28% Magnesiumoxid MgO und ca. 0,02% Natriumoxid Na2O bezogen auf die Gesamtmasse Ton. Dieses hierbei eingesetzte Material für die Treppenstufe umfasst etwa 40% Schamotte mit ca. 77% Siliciumdioxid SiO2, ca. 18,5% Aluminiumoxid Al2O3, ca. 1,7% Kaliumoxid K2O, ca.1,6% Titanoxid TiO2, ca. 0,9% Eisenoxidgemisch FeO/Fe2O3, ca. 0,1% Calziumoxid CaO und ca. 0,02% Natriumoxid Na2O bezogen auf die Gesamtmasse Schamotte. Das Material wurde mit Wasser und Verdünnungsmedien - hier Gresfix oder Dolaflux - angerührt, wobei der Wassergehalt der Mischung bei etwa 38% liegt. Diese Mischung wurde in Gießformen eingebracht, grob an der Luft und in einer Klimakammer bis zu einer Restfeuchte von ca. 12% getrocknet. Der so erhaltene Grünkörper wurde in Form gebracht, eventuell pigmentiert und/oder mit einer Engobe oder Glasurschicht versehen und in einem thermischen Sinterprozess gebrannt. Das so erhaltene Steingut wurde dabei durch die Beschichtung wasserdicht veredelt.

Diese Treppenstufe 10 ist an einem Träger 100 schwingungsgedämpft angebracht und weist dabei eine Stufendicke von nur 5cm auf. Der Träger 100 ist Teil einer Kragarmtreppe, die wegen des geringen Eigengewichts der Treppenstufe 10 recht schmal auszulegen ist.

Der Grünkörper ist vor dem Brennvorgang - wie in Figur 1 gezeigt - mit in etwa trapezförmiger Trittstufe 12 und einer gekrümmten Stufenkante 28 ausgebildet. Die dieser rechtwinklig ausgebildeten Stufenkante 28 gegenüberliegende Kante ist als wellige, abgerundete Motivkante 30 gestaltet. Solch eine Motivkante 30 ist per Form vorgebbar oder per maschineller Bearbeitung des Grünkörpers oder der gebrannten Scherbe auch in unregelmäßiger Weise zu formen.

Die Keramiktrittstufe 12 der gezeigten Treppenstufe 10 ist mit Farbpigment versehen, das witterungs- und lichtbeständig in Form einer sichtbaren Anordnung 34 eingebracht ist, die hier ein Wellen-Muster bereitstellt. Diese Treppenstufe 10 ist teilflächig auf der als Trittfläche ausgelegten Wandung 32 der Keramiktrittstufe 12 mittels einer pigmentierten Engobe wasserdicht versiegelt.

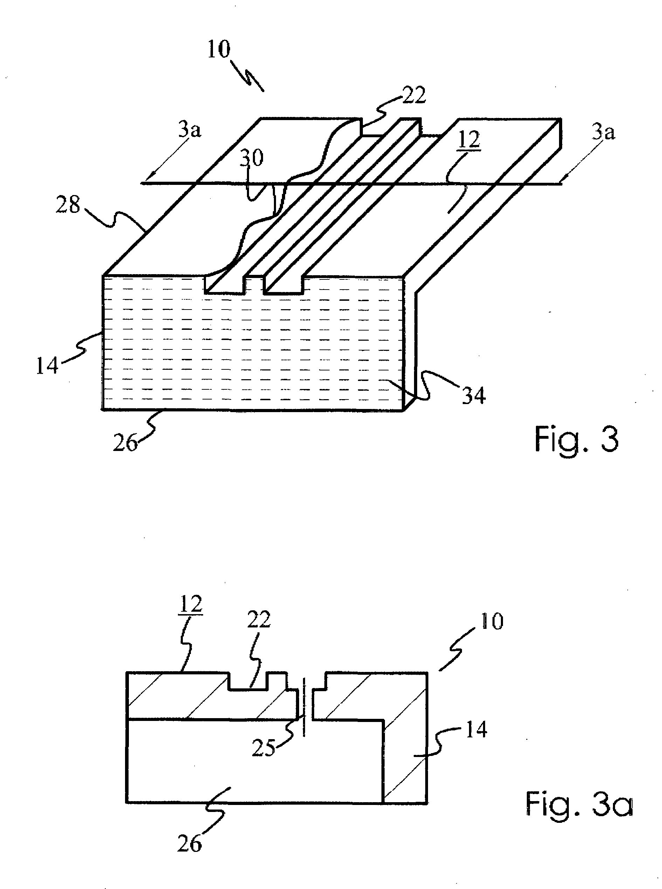

Wie insbesondere auch in Figur 2 zu sehen ist, sind auch die in Gebrauchsstellung sichtbare Wandung 32 eines Seitenteils 14, einer Unterplatte 18, eines Antritts 20 und/oder einer Stirnwand 26, siehe Figur 3, mittels der Pigmentierung 34 mit einem Bild, einem Logo, einem Buchstaben oder einem Schriftzug zu versehen.

Die Treppenstufe 10 in Figur 2 ist als Kragarmtreppenstufe ausgebildet und ist einstückig mit je einem Keramikseitenteil 14 an jeder Langseite der Keramiktrittstufe 12 auf der der Trittfläche abgewandten Seite fest verbunden. Zwischen den Seitenteilen 14 ist der Träger 100 einer geschlossenen Treppe teilweise formschlüssig anlegbar. Auf diesem Träger 100 ruht die Treppenstufe 10. Der Träger 100 ist innerhalb der Treppenstufe 10 in eine zu einer Seite hin offenen Ausnehmung 16 eingebracht. Versagt die Verbindung zwischen Träger 100 und Treppenstufe 10, so verhindert eine Begrenzung der Ausnehmung 16 durch die Keramiktrittstufe 12 und der Keramikunterplatte 18 ein gefährliches Wegrutschen oder Wegkippen der Trittfläche. Die Keramikunterplatte 18, die beiden Keramikseitenteile 14 bilden zusammen mit der Keramiktrittstufe 12 ein geschlossenes, einteiliges O-Profil.

Für die Erstellung der geschlossenen Treppe ist die Treppenstufe 10 mit einem Antritt 20 aus dem gebrannten tonhaltigen Material der Keramiktrittstufe 12 fest verbunden. Der Antritt 20 schließt sich an die Trittfläche der Keramiktrittstufe 12 an und deckt so den Spalt zwischen zwei aufeinander folgenden Treppenstufen 10 der Stiege ab.

Der Antritt 20 dieser Treppenstufe 10 weist eine Erhebung 24 auf, die als Schriftzug ausgeformt ist. Das besonders haltbare, gebrannte, tonhaltige Material macht solch gut lesbare, konturierte Formen auf der Oberfläche der Treppenstufe 10 möglich. Analog ist - aufgrund der hohen Festigkeit des verwendeten Werkstoffs - die Stufenkante 28 mit vorbestimmten Radien abgerundet zu erstellen.

Auf diese Treppenstufe 10 ist ein Code 36 aufgedruckt, der Information in Bezug auf chemische Zusammensetzung, zu einem Brennprozess und/oder einer Pigmentierung zuzuordnen ist, die für einen vorbestimmten Zeitraum gespeichert wird, um solch eine Treppenstufe 10 im Bedarfsfall nachzustellen. Der Code kann aus alphanumerischen Zeichen, einem ein- oder mehrdimensionalen Strichcode bestehen, die auch jeweils maschinenlesbar ausgeführt sind.

Bei der in Figur 3 gezeigten Treppenstufe 10 ist eine Stirnwand 26 an einem Ende der Keramiktrittstufe 12 angeformt. Diese einteilige Gestaltung aus Stirnwand 26 und Keramiktrittstufe 12 sorgt für erhebliche Steifigkeit und senkt die Eigenfrequenz der Treppenstufe 10 und schwächt den Trittschall. Diese Keramikstirnwand 26 verdeckt die Tragstruktur der Treppe und dient als Sichtfläche, die mit einer sichtbaren Anordnung 34 von Pigmenten belegt ist. Diese Anordnung ist als eine an Naturholz erinnernde Maserung gestaltet, die vollflächig mittels einer Glasur wasserdicht versiegelt ist. Die Glasur wurde auf der sichtbaren Wandung 32 im Brennprozess des tonhaltigen Materials der Treppenstufe 10 gesintert.

Die Treppenstufe 10 ist für den Außenbereich konzipiert, wobei die Keramiktrittstufe 12 mehrere Vertiefungen 22 in Form wasseraufnehmender Rillen aufweist und eine Rille mit einer optisch ansprechenden Motivkante 30 ausgespart ist. Solche Vertiefungen 22 sind auch als Stilelement oder zum Zweck der weiteren Gewichtsersparnis auf dem Seitenteil 14, der Unterplatte 18 und/oder dem Antritt 20 vorzusehen.

In der Schnittansicht der Figur 3a ist zu sehen, dass die Vertiefung 22 mit einer Bohrung 25 durch die Keramiktrittstufe 12 verbunden ist. Hier kann das aufgefangene Wasser von der Keramiktrittstufe 12 abgeleitet werden.

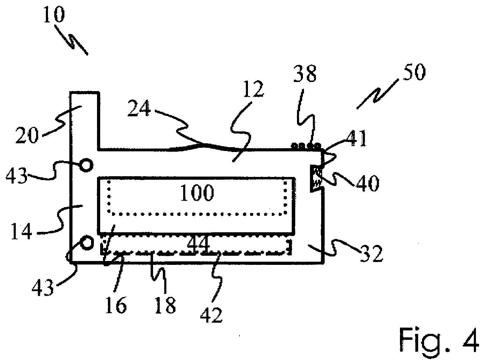

Ein Grünkörper 50 wird aus einer Mischung aus Ton und Schamotte mit Wasser maschinell geformt. Der in Figur 4 gezeigte Grünkörper 50 wurde durch Einbringen der Mischung in eine Gießform grob geformt und anschließend getrocknet. Bei einem vorbestimmten Wassergehalt wurde der Grünkörper 50 aus der Mischung maschinell so weiter verformt, dass sich eine Seitenwand 14 einstückig an der späteren Keramiktrittstufe 12 anschließt, ein Antritt 20 angeformt wird und auf einer Seite der Keramiktrittstufe 12 mehrere Erhebungen 24 überstehen. Zur späteren Abstützung des Trägers 100 der Kragarmtreppe wird eine Ausnehmung 16 in den Grünkörper 50 eingebracht, die von einer Unterplatte 18 abgeschlossen ist, die ebenfalls aus der Mischung geformt wurde. Das Herstellungsverfahren ist so gestaltet, dass der Teil des Grünkörpers 50 für den Antritt 20, die Seitenwand 14, die Unterplatte 18 und einer Wandung 32 - wie in Figur 4 ersichtlich - fugenlos aus einem Stück der Keramiktrittstufe 12 geformt sind.

In einem weiteren Verfahrensschritt wurde in der Unterplatte 18 eine Aussparung 44 ausgebildet, die später wahlweise mit einem thermischen oder elektrischen Energiespeicher 42 gefüllt werden kann und wahlweise einen Teil eines Heizsystems bildet. Das Heizsystem nutzt die Wärmeleitfähigkeit und hohe Wärmespeicherkapazität des tonhaltigen Keramikmaterials der Treppenstufe 10 optimal aus zur Beheizung eines Raums wie einem Treppenhaus.

In die Seitenwand 14 sind entsprechende Anschlusseinrichtungen 43 entweder in den Grünkörper 50 oder nach dem Sinterprozess in die Treppenstufe 10 einzubringen. Durch Standardisierung in Bezug auf Abstand, Anordnung, Größe und Art der Anschlusseinrichtungen 43 ist ein ersetzbarer Energiespeicher 42 anschließbar und eine lösbare Verbindung mit einer Gebäudeinstallation möglich. Die Treppenstufe 10 dient entweder als Strom- oder Wärmespeicher und ersetzt einen Flächenheizkörper. Ein Isoliermaterial kann zudem an der Innenseite der Unterplatte 18 und dem Energiespeicher angebracht werden.

Mit einem weiteren Verfahrensschritt wurde ein Antirutschbelag 38 auf einem Abschnitt der Keramiktrittstufe 12 angebracht. Dies kann durch Aufbringen eines Hartstoffes, von Sand, Quarz oder dergleichen auf dem Grünkörper 50 vor dem Brand erreicht werden. Alternativ kann nach dem Sinterprozess etwas Korund aufgebracht werden und in einem weiteren Brennprozess mit einer Engobe auf der Keramiktrittstufe 12 fixiert werden. Durch die Engobe und/oder Glasur kann eine fast unendliche Farbgestaltung erreicht werden, die zudem eine sehr robuste Oberfläche bereitstellen.

Die Wandung 32 der späteren Treppenstufe 10 wurde im Zuge des Herstellungsverfahrens im Zustand des Grünkörpers 50 mit einer Vertiefung 22 versehen, die später eine Lampenfassung 41 für ein Notlicht 40 aufnimmt.

Nach Umformen des Grünkörpers 50, Einbringen aller Materialabtragungen und Materialauftragungen unter Berücksichtigung des Schrumpfmaßes durch den Sinterprozess wurde der Grünkörper 50 gebrannt.

Der Brennprozess wird dabei so geführt, dass keine Deformationen auftreten und Risse, Lunker und dergleichen in der tonhaltigen Keramiktreppenstufe 10 verhindert werden.

Die vorliegende Erfindung offenbart eine neuartige Keramiktreppenstufe, die hohe Tragfähigkeit und geringen Abrieb bereitstellt. Diese relativ leichte Treppenstufe ist aus sehr robustem Werkstoff kostengünstig und massenhaft herzustellen und bietet die Möglichkeit zur Erstellung von bauoptisch ansprechenden Treppen. Die Treppenstufen nach dieser Erfindung sind mit Sicherheitsmerkmalen aus hartem Material dauerhaft auszurüsten und können kostengünstig und kurzfristig durch eine sehr ähnliche Kopie ersetzt werden.

Die Treppenstufe aus tonhaltigem Keramikmaterial zeichnet sich durch seine robuste Oberfläche und hohe Abriebfestigkeit aus. Wegen einer glasartigen Oberfläche ist diese Treppenstufe leicht zu reinigen und wenig fleckenempfindlich. Das ganzflächig eingesetzte tonhaltige Keramikmaterial ist farb- und lichtecht, bleicht nicht aus und ist aufgrund der Wasserresistenz und Hitzebeständigkeit als Baumaterial bestens geeignet. Auch gegenüber den meisten Säuren und Laugen zeigt das Treppenmaterial hohe Haltbarkeit.

Durch den erfindungsgemäßen Herstellungsprozess ergeben sich nahezu unendliche Möglichkeiten bei der Form- und Farbgebung der Treppenstufe. Diese so hergestellten Treppenstufen weisen eine hohe Belastbarkeit und Robustheit auf, die einen jahrelangen Einsatz auch in öffentlichen Gebäuden, Ämtern, Schulen usw. zulassen.

Die praktisch abgeschlossene, gebrannte Oberfläche ist antistatisch, gut von Hausstaub zu befreien und bietet keinen Nährboden für Krankheitserreger, Allergene oder Milben.

Neben der Langlebigkeit der Treppenstufe nach dieser Erfindung kann das tonhaltige Keramikmaterial nach dem Einsatz als Treppenstufe recycelt werden. Eine Wiederverwendung als mineralischer Sekundärbaustoff ist dabei genauso gut denkbar wie ein Einsatz als Grundstoff für neue Keramiken.

Das Keramikmaterial hat sowohl wärmespeichernde als auch wärmeleitende Eigenschaften. Die Treppenstufen können einige Masse aufweisen und so im Sommer passiv als Raumkühlung Verwendung finden.

### Bezugszeichentiste

- 10: Treppenstufe
- 12: Keramiktrittstufe
- 14: Seitenteil
- 16: Ausnehmung
- 18: Unterplatte
- 20: Antritt
- 22: Vertiefung
- 24: Erhebung
- 25: Bohrung
- 26: Stirnwand
- 28: Stufenkante
- 30: Motivkante
- 32: Wandung
- 34: Anordnung
- 36: Code
- 38: Antirutschbelag
- 40: Notlicht
- 41: Lampenfassung
- 42: Energiespeicher
- 43: Anschlusseinrichtung
- 44: Aussparung
- 50: Grünkörper
- 100: Träger

## Patentansprüche

1. Treppenstufe (10) mit einer fugenlosen Keramiktrittstufe (12), einer Unterplatte (18), und zwei Seitenteilen (14), wobei die Keramiktrittstufe (12) an einem Träger (100) anbringbar und unbewehrt ist, wobei die Keramiktrittstufe (12) gebranntes, tonhaltiges Material umfasst und aus einem Schamotte enthaltenden Grünkörper (50) geformt ist und wobei je ein Seitenteil (14) auf der der Keramiktrittstufe (12) abgewandten Seite an jeder Langseite der Keramiktrittstufe (12) einstückig an den Grünkörper (50) angeformt ist, welches fallweise ganz oder teilweise formschlüssig an dem Träger (100) anlegbar ist, wobei
- die Treppenstufe (10) eine zu einer Seite hin offene Ausnehmung (16) aufweist, die den Träger (100) mindestens teilweise aufnehmen kann und von der Keramiktrittstufe (12), den Seitenteilen (14) und der Unterplatte (18) begrenzt ist; und wobei
- die Unterplatte (18) und die Seitenteile (14) zusammen mit der Keramiktrittstufe (12) ein geschlossenes, einteiliges O-Profil im Querschnitt bilden und durch Brennen des Grünkörpers (50) die einteilige Treppenstufe (10) ausbilden.

2. Treppenstufe (10) nach Anspruch 1, **dadurch gekennzeichnet, dass** ein Antritt (20) einstückig oder fest verbunden ist mit der Keramiktrittstufe (12).

3. Treppenstufe (10) nach einem der vorstehend genannten Ansprüche, **dadurch gekennzeichnet, dass** die Keramiktrittstufe (12), das Seitenteil (14), die Unterplatte (18) und/oder der Antritt (20) mindestens eine Vertiefung (22), eine Erhebung (24) oder eine Bohrung (25) aufweist.

4. Treppenstufe (10) nach einem der vorstehend genannten Ansprüche, **dadurch gekennzeichnet, dass** eine Stirnwand (26) an einem Ende der Keramiktrittstufe (12) angeformt ist.

5. Treppenstufe (10) nach einem der Ansprüche 1 bis 4, **dadurch gekennzeichnet, dass** die Keramiktrittstufe (12) mit einer in etwa rechtwinkligen oder abgerundeten Stufenkante (28) versehen ist und/oder mit einer regelmäßigen oder unregelmäßig geformten Motivkante (30) abschließt.

6. Treppenstufe (10) nach einem der Ansprüche 1 bis 5, wobei die Keramiktrittstufe (12) und/oder mindestens eine Wandung (32) teil- oder vollflächig mittels einer Engobe oder einer Glasur wasserdicht versiegelt ist.

7. Treppenstufe (10) nach Anspruch 6, **dadurch gekennzeichnet, dass** die Keramiktrittstufe (12), das Seitenteil (14), die Unterplatte (18), der Antritt (20) und/oder die Stirnwand (26) mit Farbpigment versehen ist, das witterungs- und lichtbeständig in Form einer sichtbaren Anordnung (34) eingebracht ist, die insbesondere ein Bild, ein Logo, einen Buchstaben, einen Schriftzug oder ein Muster bereitstellt.

8. Treppenstufe (10) nach einem der Ansprüche 1 bis 7, wobei eine Information in Bezug auf chemische Zusammensetzung, zu einem Brennprozess und/oder einer Pigmentierung für einen vorbestimmten Zeitraum gespeichert wird und mittels eines an der Treppenstufe (10) angeordneten Codes (36) diesen gespeicherten Daten zuzuordnen ist.

9. Treppenstufe (10) nach einem der Ansprüche 1 bis 8, **dadurch gekennzeichnet, dass** die Keramiktrittstufe (12) mindestens teilweise von einem Antirutschbelag (38) abgedeckt ist.

10. Treppenstufe (10) nach einem der Ansprüche 1 bis 9, **dadurch gekennzeichnet, dass** ein Notlicht (40) an der Treppenstufe (10) angeordnet ist, dass an der Keramiktrittstufe (12) abgestützt ist.

11. Treppenstufe (10) nach einem der Ansprüche 1 bis 10, **dadurch gekennzeichnet, dass** die Treppenstufe (10) innenliegend mit einem austauschbaren Energiespeicher (42) für elektrische und/oder thermische Energie ausgestattet ist.

12. Verfahren zum Herstellen einer Treppenstufe nach einem der vorstehend genannten Ansprüche 1 bis 11 mit folgenden Schritten:
a) Erstellen eines Grünkörpers (50) aus einer Mischung von etwa 60% Ton, etwa 40% Schamotte und Wasser, wobei die Mischung in eine Gießform eingebracht wird und bis zu einem vorbestimmten Wassergehalt entwässert wird,
b) wobei der Grünkörper (50) in Form der Treppenstufe (10) gebracht wird und
c) in einem thermischen Sinterprozess gebrannt wird.

13. Verfahren nach Anspruch 12, **dadurch gekennzeichnet, dass** der Form des Grünkörpers (50) der Treppenstufe (10) unter Berücksichtigung eines Schrumpfmaßes wahlweise ein Antritt (20), eine Erhebung (24), eine Stirnwand (26) und/oder eine Wandung (32) aus der Mischung angeformt wird.

## Claims

1. Stair step (10) with a seamless ceramic tread (12), a lower plate (18), and two side parts (14), said ceramic tread (12) being attachable to a support (100) and is unreinforced, said ceramic tread (12) comprising fired clay-containing material and being formed from a green body (50) containing fireclay and
- one of said side part (14) on the side facing away from the ceramic tread (12) on each long side of the ceramic tread (12) is integrally formed to the green body (50), which can be placed case-by-case in a completely or partially form-fitting manner to said support (100),
- said stair step (10) has a recess (16) which is open to one side, and at least partially receives said support (100) and is limited by said ceramic tread (12), said side parts (14) and said lower plate (18), and
- said lower plate (18) and said side parts (14) together with said ceramic step (12) form a closed, one-piece O-profile in cross section and make a one-piece stair step (10) by firing the green body (50).

2. Stair step (10) according to claim 1, **characterized in that** a riser (20) is integrally or firmly connected to the ceramic tread (12).

3. Stair step (10) according to one of the preceding claims, **characterized in that** said ceramic tread (12), said side part (14), said lower plate (18) and/or said riser (20) has at least one dimple (22), an elevation (24) or a bore (25).

4. Stair step (10) according to one of the preceding claims, **characterized in that** an end wall (26) is formed to one end of said ceramic tread (12).

5. Stair step (10) according to one of claims 1 to 4, **characterized in that** said ceramic tread (12) is provided with an approximately rectangular or rounded step edge and/or terminates with a regular or irregularly shaped motif edge (30).

6. Stair step (10) according to one of claims 1 to 5, wherein said ceramic tread (12) and/or at least one wall (32) is partially or fully sealed watertight by means of an engobe or a glaze.

7. Stair step (10) according to claim 6, **characterized in that** said ceramic tread (12), said side part (14), said lower plate (18), said riser (20) and/or said end wall (26) is provided with a color pigment which is weatherproof and light-resistant introduced in the form of a visible arrangement (34) which in particular provides an image, a logo, a letter, lettering or a pattern.

8. Stair step (10) according to one of claims 1 to 7, wherein an information relating to chemical composition, a firing process and / or pigmentation is stored for a predetermined period of time and by means of a code (36) arranged on the step (10) can be assigned to this stored data.

9. Stair step (10) according to one of claims 1 to 8, **characterized in that** said ceramic tread (12) is at least partially covered by an anti-slip covering (38).

10. Stair step (10) according to one of claims 1 to 9, **characterized in that** an emergency light (40) is arranged on the stair step (10) that is supported on the ceramic tread (12).

11. Stair step (10) according to one of claims 1 to 10, **characterized in that** said stair step (10) is equipped with an internal exchangeable energy store (42) for electrical and / or thermal energy.

12. Method for producing a stair step according to one of the above-mentioned claims 1 to 11, comprising the following steps:
Creating a green body (50) from a mixture of about 60% clay, about 40% chamotte and water, wherein the mixture is introduced into a casting mold and dehydrated down to a predetermined water content,
wherein said green body (50) is brought in the shape of said stair step (10) and fired in a thermal sintering process.

13. Method according to Claim 12, **characterized in that** to said shape of said green body (50) of the stair step (10), taking into account a shrinkage measure, optionally a riser (20), an elevation (24), an end wall (26) and/or a wall (32) is integrally shaped from said mixture.

## Revendications

1. Marche d'escalier (10) comportant une marche en céramique lisse (12), une plaque inférieure (18) et deux parties latérales (14), dans laquelle la marche en céramique (12) peut être placée sur un support (100) et n'est pas armée, dans laquelle la marche en céramique (12) comprend un matériau non cuit contenant de l'argile et est formée à partir d'un corps cru (50) contenant de l'argile réfractaire, et
- dans laquelle chaque partie latérale (14) est formée du côté opposé à la marche en céramique (12) sur un côté longitudinal de la marche en céramique (12) d'un seul tenant avec le corps cru (50), lequel pouvant être, suivant le cas, totalement ou partiellement placé sur le support (100), dans laquelle
- la marche d'escalier (10) comprend un évidement (16) ouvert sur un côté qui peut recevoir le support (100) au moins partiellement et est délimité par la marche en céramique (12), les parties latérales (14) et la plaque inférieure ; et dans laquelle
- la plaque inférieure (18) et les parties latérales (14) forment ensemble avec la marche en céramique (12), en section transversale, un profil en O d'un seul tenant, fermé et forment par cuisson du corps cru (50) la marche d'escalier (10) d'un seul tenant.

2. Marche d'escalier (10) selon la revendication 1, **caractérisée en ce qu'**une palière (20) est réalisée d'un seul tenant avec, ou reliée fermement à la marche en céramique (12).

3. Marche d'escalier (10) selon l'une des revendications précédentes, **caractérisée en ce que** la marche en céramique (12), la partie latérale (14), la plaque inférieure (18) et/ou la première marche (20) comprend/comprennent au moins un renfoncement (22), une surélévation (24) ou un perçage (25).

4. Marche d'escalier (10) selon l'une des revendications précédentes, **caractérisée en ce qu'**une paroi frontale (26) est formée à une extrémité de la marche en céramique (12).

5. Marche d'escalier (10) selon l'une des revendications 1 à 4, **caractérisée en ce que** la marche d'escalier (12) est pourvue d'un bord de marche (28) formant sensiblement un angle droit ou arrondi et/ou se termine avec un bord à motifs réguliers ou irréguliers.

6. Marche d'escalier (10) selon l'une des revendications 1 à 5, dans laquelle la marche en céramique (12) et/ou au moins une paroi (32) est/sont scellée(s) de manière étanche à l'eau sur une partie ou la totalité de sa surface au moyen d'un engobe ou d'une glaçure.

7. Marche d'escalier (10) selon la revendication 6, **caractérisée en ce que** la marche en céramique (12), la partie latérale (14), la plaque inférieure (18), la palière (20) et/ou la paroi frontale (26) sont pourvues d'un pigment coloré, qui est appliqué de manière résistante aux intempéries et à la lumière sous la forme d'un élément visible (34) qui constitue en particulier une image, un logo, une lettre, une griffe ou un motif.

8. Marche d'escalier (10) selon l'une des revendications 1 à 7, dans laquelle des informations en relation avec la composition chimique, sont stockées pendant une durée déterminée en vue d'une opération de combustion et/ou d'une pigmentation, et sont à associer, au moyen d'un code (36) disposé sur la marche d'escalier (10), à ces données stockées.

9. Marche d'escalier (10) selon l'une des revendications 1 à 8, **caractérisée en ce que** la marche en céramique (12) est couverte au moins partiellement d'un revêtement anti-glissement (38).

10. Marche d'escalier (10) selon l'une des revendications 1 à 9, **caractérisée en ce qu'**une lumière de sécurité (40) est disposée dans la marche d'escalier (10) et prend appui sur la marche en céramique (12).

11. Marche d'escalier (10) selon l'une des revendications 1 à 10, **caractérisée en ce que** la marche d'escalier (10) est équipée intérieurement d'un dispositif de stockage d'énergie échangeable (42) pour de l'énergie électrique et/ou thermique.

12. Procédé de fabrication d'une marche d'escalier selon l'une des revendications précédentes 1 à 11, comportant les étapes suivantes :
a) la réalisation d'un corps cru (50) à partir d'un mélange d'environ 60% d'argile, environ 40% d'argile réfractaire et d'eau, le mélange étant introduit dans un moule et déshydraté jusqu'à une teneur en eau prédéterminée,
b) dans lequel le corps cru (50) est mis sous la forme d'une marche d'escalier (10) et
c) est cuite au cours d'une opération de frittage thermique.

13. Procédé selon la revendication 12, **caractérisé en ce qu'**à partir du mélange, le corps cru (50) de la marche d'escalier (10) est mis en forme, au choix, d'une palière (20), d'une surélévation (24), d'une paroi frontale (26) et/ou d'une paroi (32).
